# EUROPEAN PATENT SPECIFICATION

(11) **EP 3 002 440 B1**
(45) Date of publication and mention of the grant of the patent: **29.11.2017**
(21) Application number: 15188043.2
(22) Date of filing: 02.10.2015
(51) Int. Cl.: F02D 41/30, F02D 41/40, F02D 41/34, F02M 35/10, F02M 35/108, F02D 13/02, F02M 69/04, F02D 41/00

(54) **INTERNAL COMBUSTION ENGINE**
VERBRENNUNGSMOTOR
MOTEUR À COMBUSTION INTERNE

(30) Priority: 03.10.2014 JP 2014205021
(43) Date of publication of application: 06.04.2016
(73) Proprietor: Mitsubishi Jidosha Kogyo K.K., Tokyo 108-8410 (JP)
(72) Inventor: KOJIMA, Mitsutaka, 108-8410 Tokyo (JP); MURATA, Shinichi, 108-8410 Tokyo (JP); KOJIMA, Ichiyo, 108-8410 Tokyo (JP); KIMURA, Sadayuki, 108-8410 Tokyo (JP)
(74) Representative: Vossius & Partner Patentanwälte Rechtsanwälte mbB

(56) References cited:
- EP-A1- 2 497 925
- DE-A1-102009 036 530
- US-A1- 2013 024 093

## Description

### TECHNICAL FIELD

This disclosure relates to an internal combustion engine having two intake port prepares connected to a cylinder, the intake ports each provided with an injector for fuel injection, and particularly to a control technique of fuel injection timing of each of the injector for fuel injection.

### BACKGROUND

There is a known internal combustion engine having two intake ports connected to a cylinder, the intake ports each provided with an injector for fuel injection. Further, there is a known variable valve mechanism to control, at a selected timing, open/close movement of two intake valves for controlling open/close state of each of two intake ports.

In a case where the two intake valves are allowed to be open or closed at different valve timings, if the fuel injection timings for the two intake valves are the same, uniformity of the mixture gas in the cylinder may be reduced, or, the fuel in the form of droplets may enter the cylinder, which may leads to emission of unburnt HC or carbon deposition.

For instance, Patent Document 1 (JP 2011-157859 A) discloses the following: At the late-close-side intake port of which intake valve is set to be closed later than the other intake valve, blowback amount of the gas (mixture of fresh air and fuel) is larger than the blowback amount at the early-close-side intake port. When the gas blowback amount becomes large, the air/fuel ratio in the cylinder is likely to become partially rich at the 'late-close' side as compared with the air/fuel ratio at the 'early-close' side during the next intake stroke. Thus, deterioration of emission may be suppressed at the rich side, and the fuel injection amount to the 'late-close' intake port may thereby be decreased relative to the injection amount at the other side.

EP2497925 A1 relates to an intake apparatus of an engine. The apparatus includes a first intake passage, a second intake passage, a first intake valve, a second intake valve and a variable valve mechanism to control the second intake valve. It also discloses that an opening timing of the first intake valve an opening timing of the first intake valve and also that a valve life amount of the first intake valve is different from the second intake valve.

DE 102009036530 A1 discloses an internal combustion engine having a fuel injecting device with a compressor assigned to a suction tube of the engine.

US 2013024093 A relates to a control apparatus for an internal combustion engine.

### SUMMARY

The present invention is defined by the features of the claims.

Patent Document 1 (JP 2011-157859 A) relates to, as described above, a technique to suppress the deterioration of the emission in the case where the closing timings are made different between the intake valves, and it does not disclose or suggest application of the technique to suppression of deterioration of the emission in a case where the opening timings are different between the intake valves.

In view of the above technical problem, an object of at least one embodiment of the present invention is, in a case where opening timings of two intake valves connected to a cylinder are made different, to control fuel injection timings to the two intake ports, thereby to promote mixing and gasification of fuel to suppress reduction in uniformity of mixture gas in the cylinder, and thereby to suppress the fuel in the form of droplets entering the cylinder to suppress emission of unburnt HC or carbon deposition.

An internal combustion engine according to an embodiment of the present invention comprises: a first intake port and a second intake port which are connected to a cylinder; a first intake valve for controlling open/close state of the first intake port to the cylinder; a second intake valve for controlling open/close state of the second intake port to the cylinder; a first fuel injection valve for injecting fuel to the first intake port; a second fuel injection valve for injecting fuel to the second intake port; and a fuel injection control unit. The first intake valve is configured so that an opening timing of the first intake valve is advanced relative to an opening timing of the second intake valve, and, the fuel injection control unit is configured to perform fuel injection by the first fuel injection valve in advance of injection timing of the second fuel injection valve.

According to the above configuration, mixing and gasification of the fuel may be promoted.

In some embodiments, the cylinder is provided in the internal combustion engine configured to perform a cycle including an intake stroke, a compression stroke, an expansion stroke and an exhaust stroke, and, the fuel injection control unit is configured to perform exhaust stroke injection by the first fuel injection valve.

According to the above configuration, the exhaust stroke injection to the intake port on the side of the intake valve which is opened earlier is performed by the first fuel injection valve during the exhaust stroke immediately before the intake stroke where the intake valve is opened.

By the exhaust stroke injection, the fuel becomes premixed with air in the port, and the mixing is promoted. Further, since combustion gas in the combustion chamber flows into the intake port as a backflow when the intake valve is opened, the fuel injected by the exhaust stroke injection is mixed and heated by the backflow in the intake port or an intake tube, whereby mixing and gasification of the fuel can be promoted.

Further, since the exhaust stroke injection is performed only to the intake port with the intake valve to be opened earlier, the backflow flowing into the intake port with the intake valve to be opened earlier is larger than a backflow flowing into the intake port with the intake valve to be opened later, whereby it is possible to efficiently promote mixing and gasification of the fuel, thereby to reduce fuel consumption by the exhaust stroke injection. As a result, it is possible to promote mixing of the fuel and air efficiently utilizing the backflow, thereby to suppress emission of unburnt HC or carbon deposition.

In some embodiments, the fuel injection control unit is configured to perform fuel injection by the first fuel injection valve while the first intake valve is open and to perform fuel injection by the second fuel injection valve while the second intake valve is open, during the intake stroke after the exhaust stroke injection.

According to the above configuration, the fuel is injected by the first fuel injection valve and the second fuel injection valve while the intake valves for the two intake ports are open, whereby it is possible to ensure the injected fuel amount and to promote mixing and gasification of the fuel in both of the intake ports.

In some embodiments, the internal combustion engine further comprises a first phase varying unit configured to advance the opening timing of the first intake valve relative to the second intake valve.

According to the above configuration, the internal combustion engine has the first phase varying unit (split varying mechanism) for advancing the first intake valve relative to the second intake valve (i.e. for retarding the second intake valve relative to the first intake valve) depending on the operating state of the internal combustion engine, whereby it is possible to control the phase difference in the valve opening timing between the two intake valves.

Since the phase difference in the valve opening timing between the two intake valves, control in the case where the phases are the same and control in the case where there is a phase difference are possible.

When there is a phase difference, control of the fuel injection valve on the earlier-open side is performed, and, when there is no phase difference and the phases are the same, the exhaust stroke injection is performed for each of the fuel injection valves. The backflow can thereby be utilized, whereby it is possible to promote mixing and gasification of the fuel.

In some embodiments, the internal combustion engine further comprises a first cam for controlling opening and closing of the first intake valve, and a second cam for controlling opening and closing of the second intake valve. The first phase varying unit is configured to vary a phase of the second cam relative to the first cam.

According to the above configuration, the phase of the second cam is varied relative to the first cam, whereby it is possible to easily form the first phase varying unit to advance the first intake valve relative to the second intake valve.

In some embodiments, the internal combustion engine further comprises a second phase varying unit configured to vary a phase of the first intake valve and a phase of the second intake valve relative to rotation of a crankshaft of the internal combustion engine. The internal combustion engine is configured, when a valve overlap period between the first intake valve or the second intake valve and an exhaust valve is not less than a given period of time, to perform intake stroke injection after a lapse of the given period of time.

According to such a configuration, when the valve overlap period between at least one of the intake valves and the exhaust valve is not less than a given period of time, injection by the intake stroke injection, where injection is performed during the intake stroke, is started after a laps of the given period of time, whereby it is possible to suppress discharge of the fuel of the intake stroke injection to the exhaust system by scavenging effect, thereby to suppress reduction in the fuel efficiency.

In some embodiments, the fuel injection control unit is configured not to perform the exhaust stroke injection when the internal combustion engine is in an operating state of low rotation and high load.

When the internal combustion engine is an operating state of low rotation and high load, exhaust gas in the cylinder largely tends to generate scavenging effect by the exhaust inertia. Thus, in the above operating range, even if the exhaust stroke injection to the intake ports is performed in advance, the above-mentioned backflow is less likely to occur, it is difficult to obtain fuel mixing and gasification promoting effect by the backflow. Accordingly, in the above configuration, the exhaust stroke injection is not performed.

According to at least one embodiment of the present invention, in the case where opening timings of two intake valves connected to a cylinder are made different, by controlling fuel injection timings to the two intake ports, mixing and gasification of the fuel are promoted, whereby it is possible to suppress non-uniformity of the mixture gas in the cylinder or the fuel in the form of droplets entering the cylinder, thereby to suppress emission of unburnt HC or carbon deposition.

### BRIEF DESCRIPTION OF DRAWINGS

Fig. 1 is diagram illustrating an overall configuration of an internal combustion engine according to an embodiment of the present invention.
Fig. 2 is a planar view illustrating arrangement of fuel injection valves, intake valves, exhaust valves, exhaust ports and intake ports.
Fig. 3 is an enlarged view of the vicinity of the intake port and fuel injection valve.
Fig. 4 is a diagram illustrating a variable valve mechanism.
Fig. 5 is a partially detail cross-sectional view of the variable valve mechanism.
Fig. 6 is a construction block diagram of an ECU.
Fig. 7 is a flowchart of a fuel injection control according to a first embodiment.
Fig. 8 is a chart showing valve opening/closing timings of intake valves and exhaust valve and state of fuel injection, corresponding to the flowchart of Fig. 7.
Fig. 9 is a flowchart of a fuel injection control according to a second embodiment.
Fig. 10 is a chart showing open/close valve timings of intake valves and exhaust valve and state of fuel injection, corresponding to the flowchart of Fig. 9.
Fig. 11 is a flowchart of a fuel injection control according to a third embodiment.
Fig. 12 is a chart showing open/close valve timings of intake valves and exhaust valve and state of fuel injection, corresponding to the flowchart of Fig. 11.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

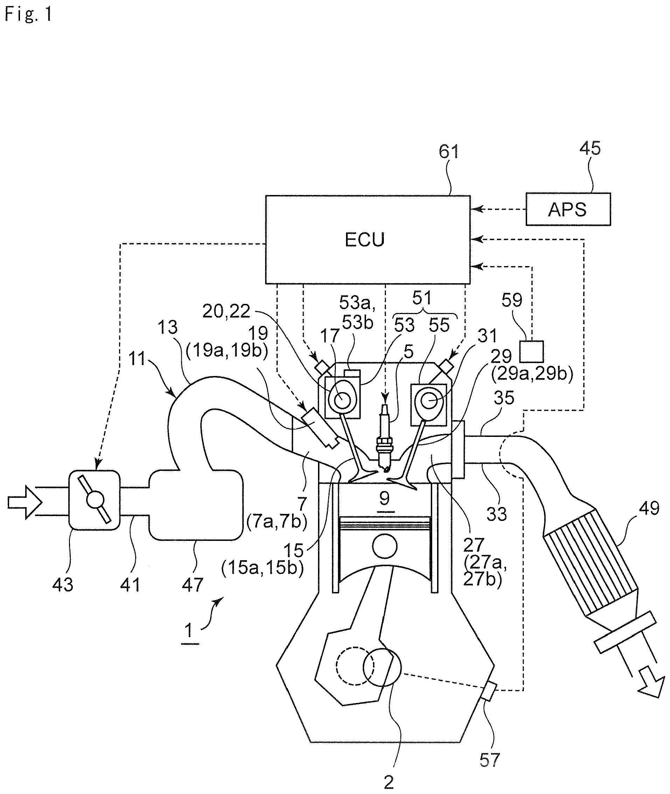

Fig. 1 is diagram illustrating an overall configuration of an internal combustion engine according to an embodiment of the present invention. As illustrated in Fig. 1, the internal combustion engine (or simply 'engine') 1 has at least one cylinder each having an ignition plug 5 provided in the cylinder head 3. For each cylinder, the cylinder head 3 has two intake ports (7a, 7b) formed so that the intake ports are connected to the combustion chamber (cylinder), and an intake passage 13 of an intake manifold 11 is connected to each of the intake ports (7a, 7b). Two intake valves (15a, 15b) are provided on the side of the combustion chamber 9 of the intake ports (7a, 7b), respectively, for each cylinder.

The intake valves (15a, 15b) are respectively configured to follow cams (20, 22) of a camshaft 17, which is configured to rotate in accordance with rotation of the engine, to be actuated to switch the communication state between the intake ports (7a, 7b) and the combustion chamber 9.

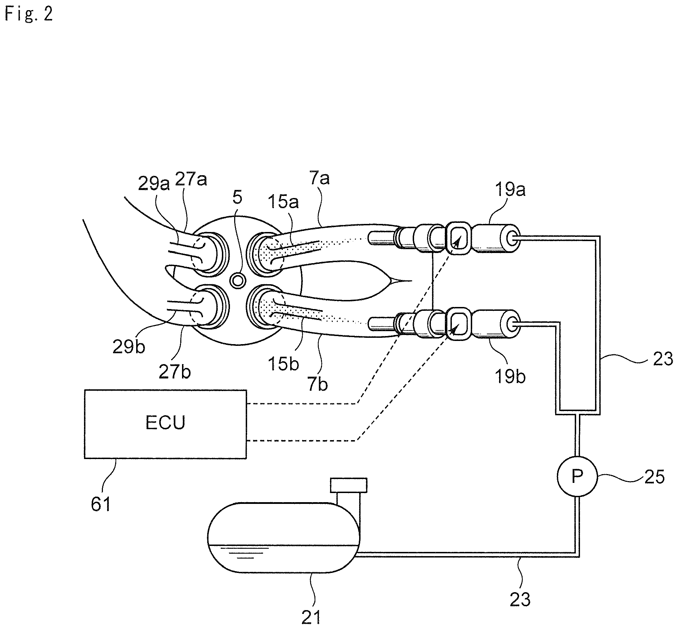

The cylinder head 3 having the intake ports (7a, 7b) formed are provided with electromagnetic fuel injection valves (injector or INJ; 19a, 19b) corresponding to the intake ports, respectively, and the fuel injection valves (19a, 19b) are configured to be provided with fuel from a fuel tank 21 via a fuel pipe 23 and a high pressure fuel injection pump 25 (see Fig. 2).

For each cylinder, the cylinder head 3 has two exhaust ports (27a, 27b) formed so that the exhaust ports are connected to the combustion chamber, and two exhaust valves (29a, 29b) are provided on the side of the combustion chamber 9 of the exhaust ports (27a, 27b), respectively, for each cylinder. The exhaust valves (29a, 29b) are respectively configured to follow cams of an exhaust camshaft 31, which is configured to rotate in accordance with rotation of the engine, to be actuated to switch the communication state between the exhaust ports (27a, 27b) and the combustion chamber 9.

An end of an exhaust manifold 33 is connected to each of the exhaust ports (27a, 27b), and the exhaust ports (27a, 27b) are in communication with an exhaust pipe 35 of the exhaust manifold 33.

Fig. 2 is a planar view illustrating arrangement of the intake valves, exhaust valves 29, intake ports 7, exhaust ports 27 and fuel injection valves 19.

As illustrated in Fig. 2, the two intake ports include a first intake port 7a and a second intake port 7b, and the two exhaust ports include a first exhaust port 27a and a second exhaust port 27b. The intake ports (7a, 7b) are provided with a first intake valve 15a and a second intake valve 15b, respectively, and the exhaust ports (27a, 27b) are provided with a first exhaust valve 29a and a second exhaust valve 29b, respectively. The two fuel injection valves include a first fuel injection valve 19a and a second fuel injection valve 19b.

The first fuel injection valve 19a is mounted so as to inject fuel to the first intake port 7a, and the second fuel injection valve 19b is mounted so as to inject fuel to the second intake port 7b.

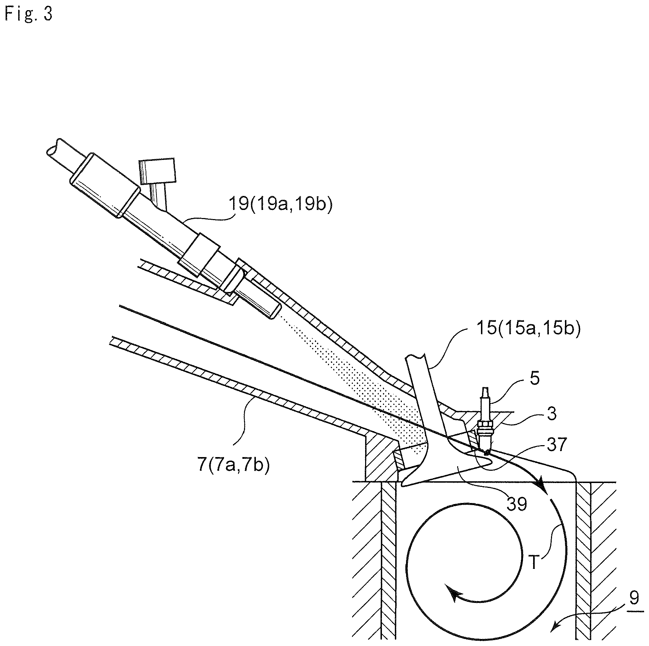

As illustrated in Fig. 3, when the intake valve 15 is open, fuel injected through the fuel injection valve 19, conveyed by intake flow, passes between a valve seat 37 of the intake port 7 and an umbrella portion 39 of the intake valve 15, and flows toward the combustion chamber 9.

In this case, the fuel may be injected so that the fuel exists unevenly and mainly in the upper portion of the intake port 7 in Fig. 3, whereby it is possible to increase the intensity of the tumble flow T in the combustion chamber 9 by the flow of the injected fuel. Further, the fuel may be injected so that the fuel exists unevenly and mainly on either of the right-hand side or the left-hand side of the valve stem in Fig. 2, it is possible to increase the intensity of the swirl flow in the combustion chamber 9.

To the intake manifold 11 provided on the upstream side of the fuel injection valve 19, an intake tube 41 is connected, and an electromagnetic throttle valve 43 is mounted on the intake tube 41. An accelerator position sensor (APS) 45 is configured to detect the position of the accelerator pedal (not shown), and the throttle valve 43 is configured to be actuated on the basis of the detection information by the accelerator position sensor 45. Further, the intake tube 41 between the intake manifold 11 and the throttle valve 43 is provided with a surge tank 47.

The exhaust pipe 35 is connected to the other end of the exhaust manifold 33, and an exhaust purifying catalyst (e.g. a ternary catalyst) 49 for purifying the exhaust gas is provided in the exhaust pipe 35.

Further, the engine 1 has provided a variable valve mechanism 51 for changing, by any amount, lift amounts and lift timings (valve operation states) of the intake valve 15 and the exhaust valve 29, and the operation states of the intake valves (15a, 15b), and operation states of the exhaust valves (29a, 29b) can be decided freely by, for example, changing a cam phase by means of the variable valve mechanism 51.

The variable valve mechanism 51 includes an intake-valve-side variable valve mechanism 53 and an exhaust-valve-side variable valve mechanism 55. The intake-valve-side variable valve mechanism 53 has a first phase varying unit (split varying mechanism) (53a) for varying a difference between the opening/closing timing of the first intake valve 15a and the opening/closing timing of the second intake valve 15b, and a second phase varying unit (53b) for varying the opening/closing timings of the first intake valve 15a and the second intake valve 15b as a whole.

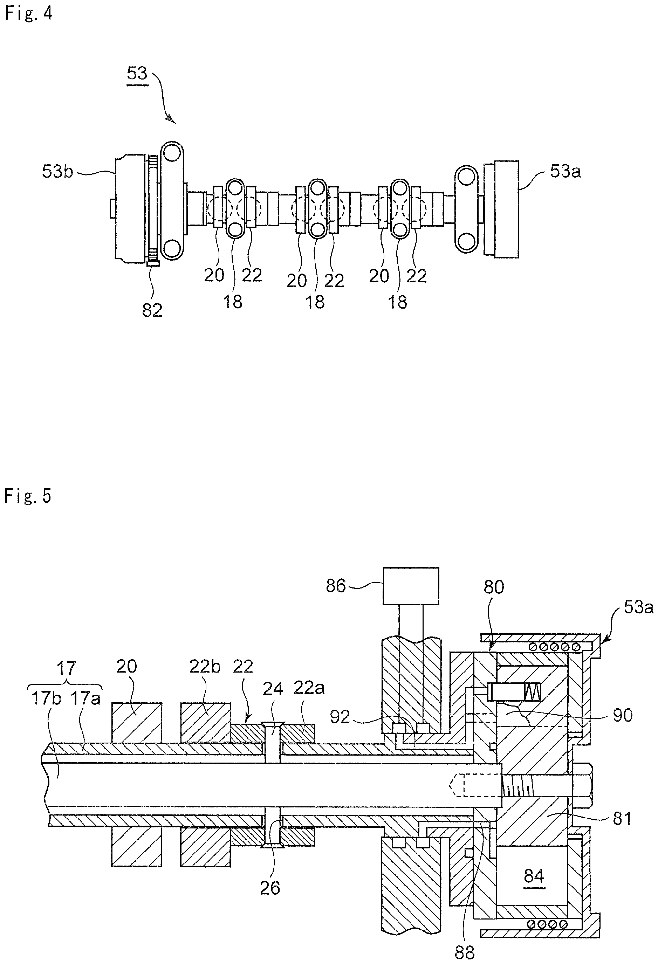

The first phase varying unit (split varying mechanism) 53a and the second phase varying unit 53b will now be described with reference to Figs. 4 and 5.

As illustrated in Fig. 5, the intake camshaft 17 has a double structure including a hollow tubular outer camshaft 17a and an inner camshaft 17b inserted in the outer camshaft 17a. The outer camshaft 17a and the inner camshaft 17b are disposed concentrically with a some gap therebetween, and are rotatably supported on a plurality of cam holders 18 formed in the cylinder head 3 of the engine 1.

A first intake cam (first cam) 20 for opening and closing the first intake valve 15a is fixed to the outer camshaft 17a. Further, on the outer camshaft 17a, a second intake cam 22 (second cam) for opening and closing the second intake valve 15b is rotatably supported.

The second intake cam 22 includes a support portion 22a of a substantially cylindrical shape to which the outer camshaft 17a is inserted, and a cam ridge portion 22b, at least a part of which is protruded from the outer circumference of the support portion 22a, for driving the second intake valve 15b.

The second intake cam 22 and the inner camshaft 17b are fixed to each other with a fixing pin 24. The fixing pin 24 are provided through the support portion 22a, the outer camshaft 17a and the inner camshaft 17b. The outer camshaft 17a has a long hole 26 formed to extend along the circumferential direction, through which the fixing pin 24 is inserted. The inner camshaft 17b has a hole through which the fixing pin 24 is inserted, and the fixing pin 24 is swaged at the both ends to be fixed to the support portion 22a.

Accordingly, the first intake cam 20 is configured to be driven by rotation of the outer camshaft 17a, and the second intake cam 22 is variable in its phase relative to the first intake cam 20 by rotation of the inner camshaft 17b.

Further, as illustrated in Fig. 4, the intake camshaft 17 has provided a first phase varying unit 53a and the second phase varying unit 53b. As the first phase varying unit 53a or the second phase varying unit 53b, a known vane type hydraulic actuator may, for example, be used. The vane type hydraulic actuator includes a vane rotor 81 rotatably provided in a housing 80 of a cylindrical shape, and has a function to vary the rotational angle of the vane rotor 81 relative to the housing 80 depending on supply of hydraulic oil to the housing 80.

The second phase varying unit 53b is provided at the front end portion of the intake camshaft 17. More specifically, a cam sprocket 82 is fixed on the housing of the second phase varying unit 53b, and the outer camshaft 17a is fixed on the vane rotor of the second phase varying unit 53b.

The first phase varying unit 53a is provided at the back end portion of the intake camshaft 17. More specifically, the housing 80 of the first phase varying unit 53a and the outer camshaft 17a are fixed to each other, and the inner camshaft 17b is fixed to the vane rotor 81 of the first phase varying unit 53a.

Accordingly, while the second phase varying unit 53b has a function to vary the rotational angle of the outer camshaft 17a relative to the cam sprocket 82, the first phase varying unit 53a has a function to vary the rotational angle of the inner camshaft 17b relative to the outer camshaft 17a. That is, the second phase varying unit 53b has a function to vary the opening/closing timings of the first intake valve 15a and the second intake valve 15b as a whole relative to the opening/closing timing of the exhaust valve, and the first phase varying unit 53a has a split variable function to vary the difference between the opening/closing timing of the first intake valve 15a and the opening/closing timing of the second intake valve 15b.

As shown in Fig. 5, hydraulic oil is supplied to the advance oil chamber 84 of the first phase varying unit 53a from the OVC (oil pressure control valve) 86 through the advance oil passage 88, and hydraulic oil is supplied to the retard oil chamber 90 of the first phase varying unit 53a from the OCV 86 through the retard oil passage 92, through which the operation of the first phase varying unit 53a is controlled.

As shown in Fig. 1, the engine 1 has provided a crank angle sensor 57 for detecting the crank angle of the crankshaft 2, and an engine rotation sensor 59.

ECU (control unit) 61 has an input/output device, a memory device (ROM, RAM, etc.), a central processing unit, a timer/counter, and so on. The engine 1 is integrally controlled by the ECU 61.

To the input side of the ECU 61, various types of sensors such as the above-described crank angle sensor 57, the accelerator position sensor (APS) 45 and the engine rotation sensor 59 are connected, and the detection information by the sensors are input to the ECU 61.

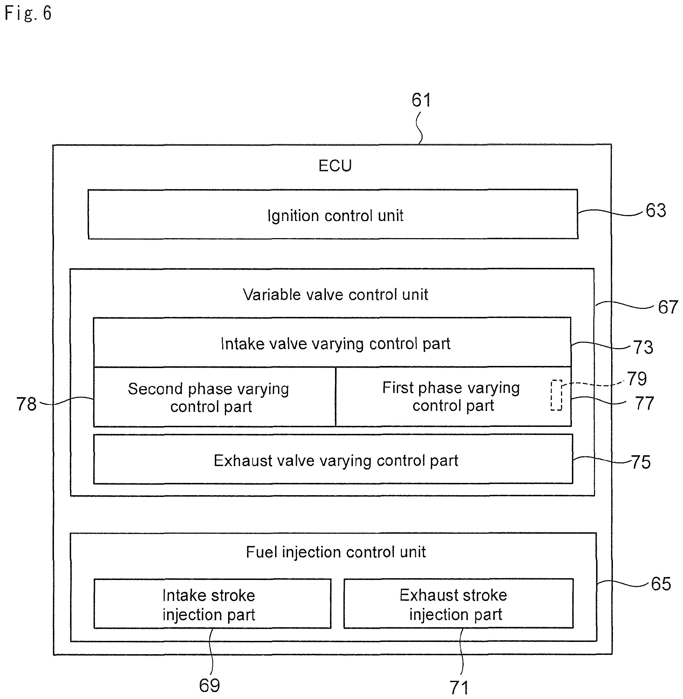

As shown in Fig. 6, the ECU 61 includes an ignition control unit 63 configured to carry out spark ignition at an appropriate timing by the ignition plug 5 on the basis of the detection information from the sensors, a fuel injection control unit 65 configured to actuate the first fuel injection valve 19a and the second fuel injection valve 19b and to control injection of the fuel to the second intake port 7b and to the second intake port 7b, and a variable valve control unit 67 configured to control the operation of the variable valve mechanism 51.

The fuel injection control unit 65 includes an intake stroke injection part 69 for injecting the fuel through the first fuel injection valve 19a or the second fuel injection valve 19b during the intake stroke, and an exhaust stroke injection part 71 for injecting the fuel through these fuel injection valves (19a, 19b) during the exhaust stroke.

The intake stroke injection part 69 and the exhaust stroke injection part 71 are configured to send drive commands to the fuel injection valves (19a, 19b), respectively, to inject a predetermined amount of the fuel during the given stroke period.

The fuel injection control unit 65 is configured to decide injection amount ratio of the intake stroke injection to the exhaust stroke injection, and the information of the decided injection amount ratio is sent to the intake stroke injection part 69 and the exhaust stroke injection part 71. Based on the information of the injection amount ratio, drive commands are sent from the intake stroke injection part 69 and the exhaust stroke injection part 71 to the fuel injection valves (19a, 19b), respectively.

The variable valve control unit 67 includes an intake valve varying control part 73 configured to control the intake-valve-side variable valve mechanism 53 to vary, by any amount, the lift amounts and the lift timings (valve operating states) of the first intake valve 15a and the second intake valve 15b, and an exhaust valve varying control part 75 configured to control the variable valve mechanism 55 the exhaust-valve-side variable valve mechanism 55 to vary, by any amount, the lift amounts and the lift timings (valve operating states) of the first exhaust valve 29a and the second exhaust valve 29b.

The intake valve varying control part 73 includes a first phase varying control part (split control part) 77 configured to control the first phase varying unit (split variable mechanism) 53a to variably control the phase difference between the opening/closing timing of the first intake valve 15a and the opening/closing timing of the second intake valve 15b, and a second phase varying control part 78 configured to control the second phase varying unit 53b to variably control the opening/closing timings of the first intake valve 15a and the second intake valve 15b as a whole, fixing the phase difference between the first intake valve 15a and the second intake valve 15b.

The variable valve control unit 67 has a memory unit having information about which one of the first intake valve 15a and the second intake valve 15b is to be opened earlier (in the case where the phase difference is fixed). Further, the first phase varying control part 77 includes an intake valve opening timing determination part 79 configured to determine, during the split control (i.e. during the phase variable control), which one of the intake valves (15a, 15b) is to be opened earlier or whether the intake valves are at the same phase or not.

The fuel injection control for the first fuel injection valve 19a and the second fuel injection valve 19b by the fuel injection control unit 65 of the ECU 61 having the above-described configuration will now be described.

### (First embodiment)

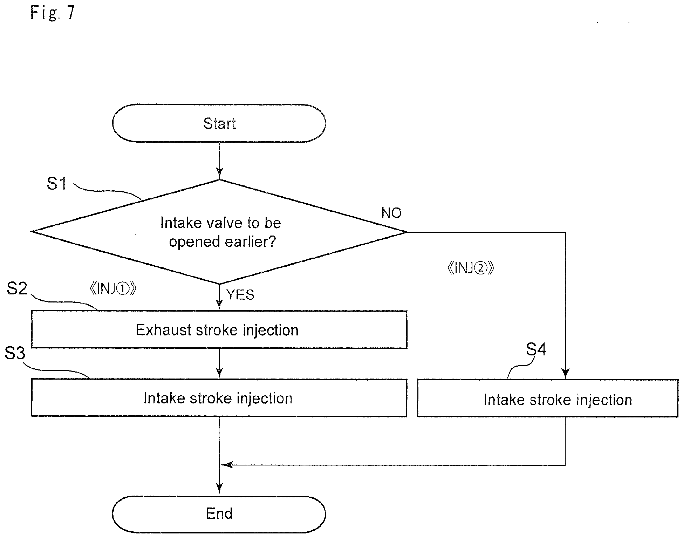

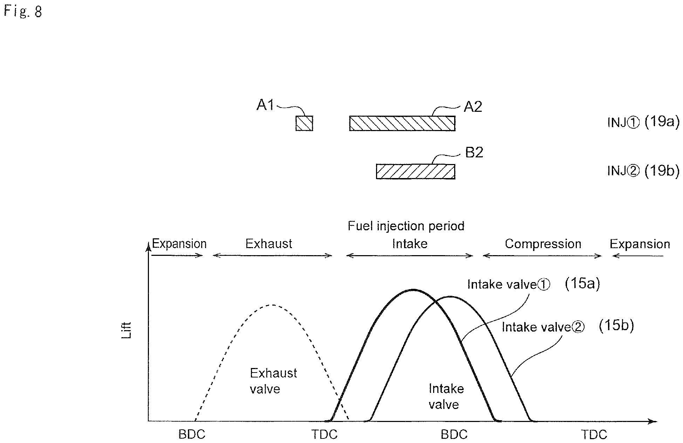

First embodiment of the fuel injection control will now be described with reference to Fig. 7 and Fig. 8. In the first embodiment, the variable valve control unit 67 of the ECU 61 does not perform control of the variable valve mechanism 51, and the first intake valve 15a and the second intake valve 15b are set to be in a state where the phase difference is fixed at a predetermined value. That is, in the first embodiment, the variable valve mechanism 51 is not operated, or, the variable valve mechanism 51 is not provided, and there is a predetermined difference between the opening timing of the first intake valve 15a and the opening timing of the second intake valve 15b.

With regard to the exhaust valves 29, the first exhaust valve 29a and the second exhaust valve 29b are operated at the same phase, as shown in Fig. 8.

In the flowchart of Fig. 7, first, in step S1, it is determined which one of the first intake valve 15a and the second intake valve 15b is to be opened earlier. That is, whether the first intake valve 15a opens earlier or not is determined on the basis of the preset information.

The case where the determination result for step S1 is 'Yes', that is, the case where the first intake valve 15a opens earlier will be described as an example. In this case, in step S2, the exhaust stroke injection to the first intake valve 15a is performed. That is, in the exhaust stroke immediately before the intake stroke, the fuel is injected through the first fuel injection valve 19a to the first intake port 7a. Then, in step S3, intake stroke injection to the first intake port 7a is performed during the intake stroke.

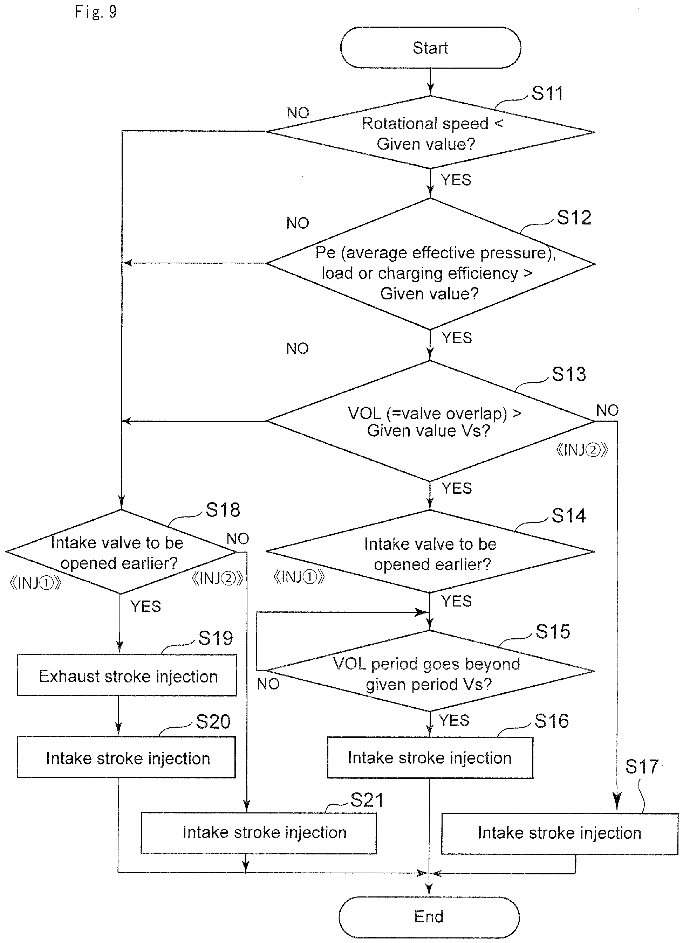

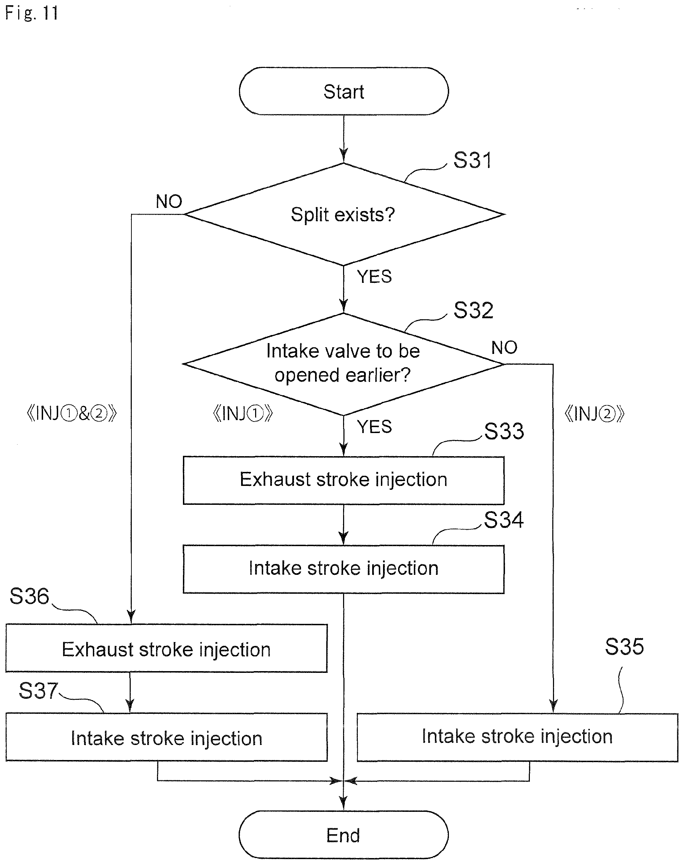

In the flowcharts, 'Intake valve to be opened earlier?' of step S1 Fig. 7, step S14 and S18 in Fig. 9, and step S32 in Fig. 11 represents a determination of whether the intake valve for which injection is performed is the intake valve which is to be opened earlier or not.

On the other hand, if the determination result for step S1 is 'No', that is, for the second intake valve 15b which is to be opened later, intake stroke injection through the second fuel injection valve 19b to the second intake port 7b is performed in step S4.

Fig. 8 is a chart showing the valve opening/closing timings (lift states) of the intake valves (15a, 15b) and the fuel injection valves (19a, 19b) and state of fuel injection, corresponding to the flowchart of Fig. 7. The chart shows the case where the first intake valve 15a opens earlier, and in this case, exhaust stroke injection (the part denoted by 'A1' in Fig. 8) through the first fuel injection valve 19a is performed, and then, intake stroke injection (the part denoted by 'A2' in Fig. 8) through the first fuel injection valve 19a is performed during the intake stroke. Through the second fuel injection valve 19b, exhaust stroke injection is not performed, and intake stroke injection (the part denoted by 'B2' in Fig. 8) is performed on the basis of the intake injection timing during the intake stroke.

As described above, when a predetermined phase difference is defined, the exhaust stroke injection is performed only to the first intake port 7a on the side of the first intake valve 15a to be opened earlier during the exhaust stroke immediately before the intake stroke where the intake valve is opened.

Then, for each of the first intake valve 15a and the second intake valve 15b, the intake stroke injection is performed in the intake stroke. That is, the exhaust stroke injection to the first intake port 7a is performed in advance in the exhaust stroke before the intake stroke where the first intake valve 15a is opened, and by the exhaust stroke injection, the fuel is preliminarily mixed with air in the intake port 7a. Further, since the first intake valve 15a is opened earlier than the intake valve 15b, when the first intake valve 15a is opened, the combustion gas in the combustion chamber 9 flows into the intake port 7a as a backflow, whereby mixing and gasification of the fuel is promoted in the first intake port 7a and the intake passage 13.

That is, by performing the exhaust stroke injection only on the side of the intake port for which the intake valve is opened earlier, it is possible to effectively use the backflow and to promote mixing and gasification of the fuel.

Further, since the exhaust stroke injection is performed only to the first intake port 7a for which the intake valve is opened earlier, the backflow flowing into the first intake port 7a for which the intake valve is opened earlier is larger than the backflow flowing into the second intake port 7b for which the intake valve is opened later, whereby it is possible to efficiently promote mixing and gasification of the fuel. Accordingly it is possible to reduce fuel consumption of the exhaust stroke injection.

Further, in this embodiment, for the first intake valve 15a, of which valve opening timing is advanced relative to the second intake valve 15b, the intake stroke injection is performed (started) by the first fuel injection valve 19a before the intake stroke injection is performed (started) by the second fuel injection valve 19b. As shown in Fig. 8, the intake stroke injection during the period denoted by 'A2' is advanced relative to the intake stroke injection during the period denoted by 'B2', and the intake stroke injection is performed so that the opening timing of the intake valve and the starting timing of the intake stroke injection are coincident. During each of the intake valves is opened, the intake stroke injection is performed. The fuel for the intake stroke injection, carried by the intake flow, flows into the combustion chamber 9, and mixing and gasification is promoted in the combustion chamber. Further, by shifting the valve opening timing of the intake valve, swirl flow is likely to occur in the combustion chamber 9, whereby the mixing and gasification can be more promoted.

As a result, by the promotion of mixing of the fuel and air, the problem such as emission of unburnt HC or carbon deposition can be reduced. Further, intensity of the in-cylinder flow by the swirl flow is increased, whereby it is possible to shorten the combustion period and to improve the fuel efficiency.

### (Second embodiment)

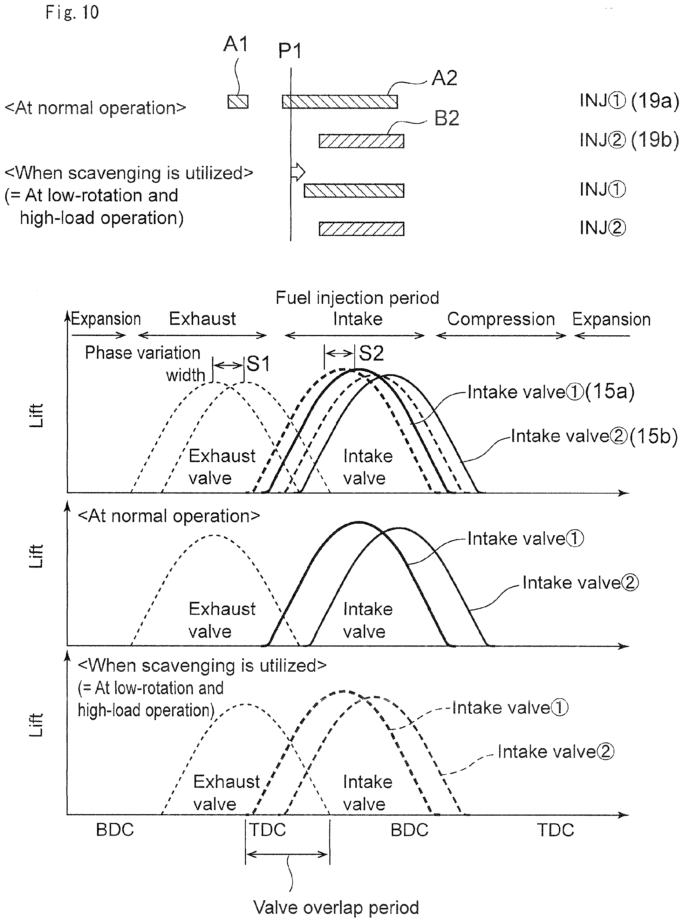

Second embodiment of the fuel injection control will now be described with reference to Fig. 9 and Fig. 10. In the second embodiment, the variable valve mechanism 51 is controlled by the variable valve control unit 67 of the ECU 61, and the phase difference between the first intake valve 15a and the second intake valve 15b is fixed. That is, although the variable valve mechanism 51 is operated, the second phase varying control part 78 is operated to vary the valve opening/closing timings of the first intake valve 15a and the second intake valve 15b as a whole in a state with a predetermined phase difference between the first intake valve 15a and the second intake valve 15b. As shown in Fig. 10, the valve opening timings are varied by a phase variation width S1 (in the case of the exhaust valves) and phase variation width S2 (in case of the intake valves), as a whole. This embodiment is not the same as the third embodiment where the first phase varying unit (split varying mechanism) 53a is operated, which will be described later.

In Fig. 9, first, in step S11, it is determined whether the engine rotational speed is less than a given value or not. This given value is a threshold for determine a low rotation region of the operating state of the engine. If the result is 'Yes', in step S12, engine average effective pressure, engine load or charging efficiency is calculated on the basis of signals from the sensors such as the crank angle sensor 57, the accelerator position sensor (APS) 45, the engine rotation sensor 59 or an air flow meter (not shown) for measuring the intake flow rate, and it is determined whether the calculated value is greater than the prescribed value. That is, in step S12, whether the engine is in a high load state or not is determined.

If the result of step S 12 is 'Yes', in step S 13, the valve overlap period between the intake valves 15 and the exhaust valves 29 is calculated, and whether the calculated value is greater than a predetermined period Vs or not is determined.

The valve overlap period is calculated as a period where the overlap amount becomes the largest among the first intake valve 15a and the second intake valve 15b, and the first exhaust valve 29a and the second exhaust valve 29b. The valve overlap period is calculated by the variable valve control unit 67.

If the result of step S13 is 'Yes', the process proceeds to step S14, and it is determined which one of the first intake valve 15a and the second intake valve 15b is to be opened earlier.

If it is determined that the first intake valve 15a is opened earlier, the process proceeds to step S 15, and in step S 15, it is determined whether an actual valve overlap period goes beyond the predetermined period Vs or not on the basis of the signal from the crank angle sensor 57. If the actual valve overlap period is longer than the predetermined period Vs, the process proceeds to step S16, and the intake stroke injection is performed to the first intake valve 15a.

As for the second intake valve 15b, the process proceeds to step S 17, and the intake stroke injection is performed in the intake stroke.

Through the above-described steps S11 and S12, whether the engine is in an operating state of low-rotation and high-load. If the engine is in such an operating state, the combustion gas in the combustion chamber 9 is highly likely to be scavenged by the exhaust inertia effect. Thus, in this operating region, even if the exhaust stroke injection to the intake port is performed in advance, the above-described backflow is less likely to occur because the scavenging effect at the time of opening of the intake valve is large, and it is difficult to promote mixing and gasification of the fuel by the backflow. This is because the exhaust stroke injection is not allowed to be performed in this embodiment.

In particular, when the valve overlap is greater than the predetermined value, the fuel and the mixture gas are blown through to the exhaust passage side for a relatively long period. Because of this in addition to the scavenging effect, it is difficult to promote mixing and gasification of the fuel by the backflow, and thus the exhaust stroke injection to the side of the intake valve to be opened earlier is suspended.

If the determination result is 'No' in step S11, S12 or S13, the process proceeds to step S18, and it is determined which one of the first intake valve 15a and the second intake valve 15b is to be opened earlier.

If it is determined that the first intake valve 15a is to be opened earlier, the exhaust stroke injection is performed in step S19. As for the second intake valve 15b, the intake stroke injection is performed in the intake stroke in step S21.

Fig. 10 is a chart showing the valve opening/closing timings (lift states) of the intake valves (15a, 15b) and the fuel injection valves (19a, 19b) and state of fuel injection, corresponding to the flowchart of Fig. 9.

That is, it shows the valve opening/closing timings of the intake valves 15 and the exhaust valves 29, and the state of fuel injection.

'At normal operation' in Fig. 10 corresponds to steps S18 to S21 of the flowchart of Fig. 9. That is, the exhaust stroke injection is performed only for the side of the first intake port 7a for which the intake valve is opened earlier, whereby it is possible to effectively use the backflow, thereby to promote mixing and gasification of the fuel.

In Fig. 10, when scavenging is utilized, the engine is in the low-rotation and high-load operation state, and this occasion corresponds to steps S11 to S 17 of the flowchart of Fig. 9. That is, the exhaust stroke injection is not performed to the first intake valve 15a which is to be opened earlier; further, if the valve overlap period is longer than the predetermined period Vs, also the intake stroke injection is not performed until the time elapses over the predetermined period Vs (See the arrow with the contour in black and filled with white in Fig. 10. The injection timing of the first fuel injection valve 19a is delayed relative to the standard timing P1 for the case of utilizing scavenging.). It is thereby possible to prevent the fuel injected from the first fuel injection valve 19a to the first intake port 7a or the fuel injected from the second fuel injection valve 19b to the second intake port 7b from discharging uselessly to the exhaust passage side. As a result, it is possible to reduce the fuel consumption.

The predetermined period Vs may be evaluated through, for example, experiments or simulation on the relationship between the valve overlap period and the degree of the effect of mixing or gasification of the fuel by the backflow, and it may be determined based on the evaluation result.

### (Third embodiment)

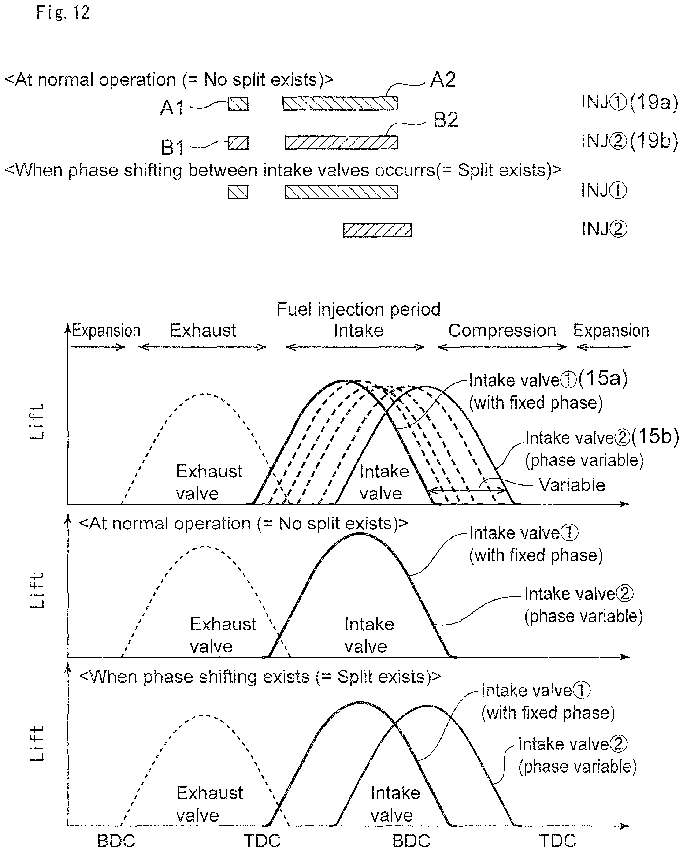

Third embodiment of the fuel injection control will now be described with reference to Fig. 11 and Fig. 12. In the third embodiment, the variable valve mechanism 51 controlled by the variable valve control unit 67 of the ECU 61, and the first phase varying control part 77 for adjusting the relative phase difference between the first intake valve 15a and the second intake valve 15b is operated to perform split varying control.

In Fig. 11, first, in step S31, whether a split exists or not is determined. By means of the split, the phase difference between the opening/closing timing of the first intake valve 15a and the opening/closing timing of the second intake valve 15b can be varied by the first phase varying control part 77, as described above, and whether the split varying mechanism 53a is operated or not is determined in step S31.

If the split exists, that is, the result is 'Yes' for step S31, then in step S32, it is determined which one of the first intake valve 15a and the second intake valve 15b is to be opened earlier. This determination is done by the intake valve opening timing determination part 79 of the split control part 77.

Follows is a description of an example of a case where the determination result of step S32 is 'Yes', that is, if the first intake valve 15a is to be opened earlier. If the result is 'Yes' for step S32, the exhaust stroke injection to the first intake valve 15a is performed in step S333. That is, in the exhaust stroke immediately before the intake stroke, the fuel is injected to the first intake port 7a. Then, in step S34, the intake stroke injection to the first intake port 7a is performed in the intake stroke.

On the other hand, if the determination result of step S32 is 'No', that is, as for the second intake valve 15b to be opened later, the intake stroke injection is performed to the second intake port 7b in step S35.

If the split is not exist in step S31, the process proceeds to step S36. In this case where the split is not exist, there is no phase difference between the opening/ closing timing of the first intake valve 15a and the opening/closing timing of the second intake valve 15b. In this case, the opening/closing timing of the first intake valve 15a and the opening/closing timing of the intake valve 15b are kept at the same phase, and for each of the intake valve 15a and the intake valve 15b, the exhaust stroke injection (the parts denoted by 'A1' and 'B1' in Fig. 12) is performed in step S36, and the intake stroke injection (the parts denoted by 'A2' and 'B2' in Fig. 12) is performed in step S37.

Fig. 12 is a chart showing the valve opening/closing timings (lift states) of the intake valves (15a, 15b) and the fuel injection valves (19a, 19b) and state of fuel injection, corresponding to the flowchart of Fig. 11.

In Fig. 12, the case of the normal operation (i.e. no split existing) corresponds to steps S36 to S37 of the flowchart of Fig. 11. That is, the exhaust stroke injection is performed to both of the first intake port 7a and the second intake port 7b, whereby it is possible to effectively use the backflow and to promote mixing and gasification of the fuel. Further, the exhaust stroke injection and the intake stroke injection are performed through both of the fuel injection valves, whereby it is possible to increase the total fuel injection amount, and it becomes easy to ensure the fuel amount required when the output is increased.

The case where there is a phase shifting (in the case of a split existing) corresponds to steps S32 to S35 of the flowchart of Fig. 11. That is, to the first intake valve 15a to be opened earlier, the exhaust stroke injection and then the intake stroke injection are performed, and to the second intake valve 15b to be opened later, the intake stroke injection is performed.

In the third embodiment, the variable valve mechanism 51 is controlled by the variable valve control unit 67 of the EUC 61, and in the case where the first phase varying unit 53a for adjusting the phase difference between the first intake valve 15a and the second intake valve 15b is operated, the phase difference between the opening timing of the first intake valve 15a and the opening timing of the second intake valve 15b are controlled. Accordingly, in some cases, the phases of the two intake valves are the same, and in some other cases, the phase differences are different, during the control.

When the phases are different, the exhaust stroke injection is performed to the fuel injection valve on the side of the intake valve to be opened earlier, and when the phases are the same, the exhaust stroke injection is performed to each of the fuel injection valves. By the configuration, even when the first phase varying unit (split varying mechanism) 53 is being operated for the intake valves, it is possible to use the backflow through the exhaust stroke injection to promote mixing of the fuel and air, thereby to suppress the problem such as emission of unburnt HC or carbon deposition.

The second embodiment and the third embodiment may be used in combination.

### Industrial Applicability

According to the present invention, when opening timing of two intake valves connected to a cylinder are made different, fuel injection timings to the two intake ports are controlled so as to perform exhaust stroke injection to the intake port on the side of the intake valve to be opened earlier. It is thereby possible to suppress to suppress non-uniformity of the mixture gas in the cylinder or the fuel in the form of droplets entering the cylinder, thereby to suppress emission of unburnt HC or carbon deposition. Therefore the present invention may effectively be applicable to internal combustion engines having two intake valves.

## Claims

1. An internal combustion engine (1) comprising:
a first intake port (7a) and a second intake port (7b) which are connected to a cylinder (9);
a first intake valve (15a) for controlling open/close state of the first intake port (7a) to the cylinder (9);
a second intake valve (15b) for controlling open/close state of the second intake port (7b) to the cylinder (9);
a first fuel injection valve (19a) for injecting fuel to the first intake port (7a);
a second fuel injection valve (19b) for injecting fuel to the second intake port (7b); and
a fuel injection control unit (65),
wherein the first intake valve (15a) is configured so that an opening timing of the first intake valve (15a) is advanced relative to an opening timing of the second intake valve (15b), and
wherein the fuel injection control unit (65) is configured to perform fuel injection by the first fuel injection valve (19a) in advance of injection timing of the second fuel injection valve (19b),
**characterized in that**
the cylinder (9) is provided in the internal combustion engine (1) configured to perform a cycle including an intake stroke, a compression stroke, an expansion stroke and an exhaust stroke;
the fuel injection control unit (65) is configured to perform exhaust stroke injection by the first fuel injection valve (19a),
the fuel injection control unit (65) is configured to perform fuel injection by the first fuel injection valve (19a) while the first intake valve (15a) is open and to perform fuel injection by the second fuel injection valve (19b) while the second intake valve (15b) is open, during the intake stroke after the exhaust stroke injection; and
the fuel is injected by the first fuel injection valve (19a) and the second fuel injection valve (19b) while the two intake valves (15a, 15b) are open.

2. The internal combustion engine (1) according to claim 1, further comprising a first phase varying unit (53a) configured to advance the opening timing of the first intake valve (15a) relative to the second intake valve (15b).

3. The internal combustion engine (1) according to claim 2, further comprising:
a first cam (20) for controlling opening and closing of the first intake valve (15a); and
a second cam (22) for controlling opening and closing of the second intake valve (15b),
wherein the first phase varying unit (53a) is configured to vary a phase of the second cam (22) relative to the first cam (20).

4. The internal combustion engine (1) according to any one of claims 1 to 3, further comprising a second phase varying unit (53b) configured to vary a phase of the first intake valve (15a) and a phase of the second intake valve (15b) relative to rotation of a crankshaft of the internal combustion engine (1),
wherein the internal combustion engine (1) is configured, when a valve overlap period between the first intake valve (15a) or the second intake valve (15b) and an exhaust valve (29) is not less than a given period of time, to perform intake stroke injection after a lapse of the given period of time.

5. The internal combustion engine (1) according to claim 1, wherein the fuel injection control unit (65) is configured not to perform the exhaust stroke injection when the internal combustion engine (1) is in an operating state of low rotation and high load.

## Patentansprüche

1. Verbrennungsmotor (1) mit:
einer ersten Einlassöffnung (7a) und einer zweiten Einlassöffnung (7b), die mit einem Zylinder (9) verbunden sind;
einem ersten Einlassventil (15a) zum Steuern des Öffnungs-/Schließzustands der ersten Einlassöffnung (7a) zum Zylinder (9);
einem zweiten Einlassventil (15b) zum Steuern des Öffnungs-/Schließzustands der zweiten Einlassöffnung (7b) zum Zylinder (9);
einem ersten Kraftstoffeinspritzventil (19a) zum Einspritzen von Kraftstoff zur ersten Einlassöffnung (7a);
einem zweiten Kraftstoffeinspritzventil (19b) zum Einspritzen von Kraftstoff zur zweiten Einlassöffnung (7b); und
einer Kraftstoffeinspritzsteuereinheit (65),
wobei das erste Einlassventil (15a) derart konfiguriert ist, dass ein Öffnungszeitpunkt des ersten Einlassventils (15a) bezüglich eines Öffnungszeitpunktes des zweiten Einlassventils (15b) zeitlich früher liegt;
wobei die Kraftstoffeinspritzsteuereinheit (65) derart konfiguriert ist, dass eine Kraftstoffeinspritzung durch das erste Kraftstoffeinspritzventil (19a) bezüglich des Einspritzzeitpunktes des zweiten Kraftstoffeinspritzventils (19b) zeitlich früher liegt,
**dadurch gekennzeichnet, dass**
der Zylinder (9) im Verbrennungsmotor (1) angeordnet ist, der konfiguriert ist, einen Zyklus auszufahren, der einen Einlasshub, einen Kompressionshub, einen Arbeitshub und einen Auslasshub beinhaltet;
die Kraftstoffeinspritzsteuereinheit (65) dafür konfiguriert ist, eine Auslasshubeinspritzung durch das erste Kraftstoffeinspritzventil (19a) auszuführen;
die Kraftstoffeinspritzsteuereinheit (65) dafür konfiguriert ist, während des Einlasshubs nach der Auslasshubeinspritzung eine Kraftstoffeinspritzung durch das erste Kraftstoffeinspritzventil (19a) auszuführen, während das erste Einlassventil (15a) offen ist, und eine Kraftstoffeinspritzung durch das zweite Kraftstoffeinspritzventil (19b) auszuführen, während das zweite Einlassventil (15b) offen ist; und
der Kraftstoff durch das erste Kraftstoffeinspritzventil (19a) und das zweite Kraftstoffeinspritzventil (19b) eingespritzt wird, während die beiden Einlassventile (15a, 15b) offen sind.

2. Verbrennungsmotor (1) nach Anspruch 1, ferner mit einer ersten Phasenänderungseinheit (53a), die dafür konfiguriert ist, den Öffnungszeitpunkt des ersten Einlassventils (15a) derart einzustellen, dass er relativ zu demjenigen des zweiten Einlassventils (15b) früher liegt.

3. Verbrennungsmotor (1) nach Anspruch 2, ferner mit:
einer ersten Nocke (20) zum Steuern des Öffnungs- und des Schließvorgangs des ersten Einlassventils (15a); und
einer zweiten Nocke (22) zum Steuern des Öffnungs- und des Schließvorgangs des zweiten Einlassventils (15b),
wobei die erste Phasenänderungseinheit (53a) dafür konfiguriert ist, eine Phase der zweiten Nocke (22) bezüglich derjenigen der ersten Nocke (20) zu ändern.

4. Verbrennungsmotor (1) nach einem der Ansprüche 1 bis 3, ferner mit einer zweiten Phasenänderungseinheit (53b), die dafür konfiguriert ist, eine Phase des ersten Einlassventils (15a) und eine Phase des zweiten Einlassventils (15b) relativ zu einer Drehbewegung einer Kurbelwelle des Verbrennungsmotors 1 zu ändern,
wobei der Verbrennungsmotor (1) derart konfiguriert ist, dass, wenn eine Ventilüberschneidungsdauer zwischen dem ersten Einlassventil (15a) oder dem zweiten Einlassventil (15b) und einem Auslassventil (29) nicht kürzer ist als eine vorgegebene Zeitdauer, nach Ablauf der vorgegebenen Zeitdauer eine Einlasshubeinspritzung ausgeführt wird.

5. Verbrennungsmotor (1) nach Anspruch 1, wobei die Kraftstoffeinspritzsteuereinheit (65) dafür konfiguriert ist, keine Auslasshubeinspritzung auszufahren, wenn der Verbrennungsmotor (1) sich in einem Betriebszustand mit einer niedrigen Drehzahl und einer hohen Last befindet.

## Revendications

1. Moteur à combustion interne (1) comprenant :
un premier orifice d'admission (7a) et un deuxième orifice d'admission (7b) qui sont reliés à un cylindre (9) ;
une première soupape d'admission (15a) pour commander l'état ouvert/fermé du premier orifice d'admission (7a) vers le cylindre (9) ;
une deuxième soupape d'admission (15b) pour commander l'état ouvert/fermé du deuxième orifice d'admission (7b) vers le cylindre (9) ;
une première soupape d'injection de carburant (19a) pour injecter du carburant vers le premier orifice d'admission (7a) ;
une deuxième soupape d'injection de carburant (19b) pour injecter du carburant vers le deuxième orifice d'admission (7b) ; et
une unité de commande d'injection de carburant (65),
dans lequel la première soupape d'admission (15a) est configurée de sorte qu'une synchronisation d'ouverture de la première soupape d'admission (15a) soit avancée par rapport à une synchronisation d'ouverture de la deuxième soupape d'admission (15b), et
dans lequel l'unité de commande d'injection de carburant (65) est configurée pour effectuer l'injection de carburant par la première soupape d'injection de carburant (19a) à l'avance de la synchronisation d'injection de la deuxième soupape d'injection de carburant (19b),
**caractérisé en ce que**
le cylindre (9) est prévu dans le moteur à combustion interne (1) configuré pour effectuer un cycle comprenant une course d'admission, une course de compression, une course de détente et une course d'échappement ;
l'unité de commande d'injection de carburant (65) est configurée pour effectuer l'injection de course d'échappement par la première soupape d'injection de carburant (19a),
l'unité de commande d'injection de carburant (65) est configurée pour effectuer l'injection de carburant par la première soupape d'injection de carburant (19a) alors que la première soupape d'admission (15a) est ouverte et pour effectuer l'injection de carburant par la deuxième soupape d'injection de carburant (19b) alors que la deuxième soupape d'admission (15b) est ouverte, pendant la course d'admission après l'injection de course d'échappement ; et
le carburant est injecté par la première soupape d'injection de carburant (19a) et la deuxième soupape d'injection de carburant (19b) alors que les deux soupapes d'admission (15a, 15b) sont ouvertes.

2. Moteur à combustion interne (1) selon la revendication 1, comprenant en outre une première unité de modification de phase (53a) configurée pour avancer la synchronisation d'ouverture de la première soupape d'admission (15a) par rapport à la deuxième soupape d'admission (15b).

3. Moteur à combustion interne (1) selon la revendication 2, comprenant en outre :
une première came (20) pour commander l'ouverture et la fermeture de la première soupape d'admission (15a) ; et
une deuxième came (22) pour commander l'ouverture et la fermeture de la deuxième soupape d'admission (15b),
dans lequel la première unité de modification de phase (53a) est configurée pour modifier une phase de la deuxième came (22) par rapport à la première came (20).

4. Moteur à combustion interne (1) selon l'une quelconque des revendications 1 à 3, comprenant en outre une deuxième unité de modification de phase (53b) configurée pour modifier une phase de la première soupape d'admission (15a) et une phase de la deuxième soupape d'admission (15b) par rapport à la rotation d'un vilebrequin du moteur à combustion interne (1),
dans lequel le moteur à combustion interne (1) est configuré, lorsqu'une période de chevauchement de soupapes entre la première soupape d'admission (15a) ou la deuxième soupape d'admission (15b) et une soupape d'échappement (29) n'est pas inférieure à une période de temps donnée, pour effectuer l'injection de course d'admission après que la période de temps donnée s'est écoulée.

5. Moteur à combustion interne (1) selon la revendication 1, dans lequel l'unité de commande d'injection de carburant (65) est configurée pour ne pas effectuer l'injection de course d'échappement lorsque le moteur à combustion interne (1) est dans un état de fonctionnement à rotation lente et charge élevée.
